# EUROPÄISCHE PATENTSCHRIFT

(11) **EP 0 728 611 B1**
(45) Veröffentlichungstag und Bekanntmachung des Hinweises auf die Patenterteilung: **23.07.1997**
(21) Anmeldenummer: 96101944.5
(22) Anmeldetag: 10.02.1996
(51) Int. Cl.: B60K 20/02, F16H 59/04

(54) **Lagerung für den Schalthebel insbesondere eines Geschwindigkeitswechselgetriebes eines Kraftfahrzeuges**
Mounting for a lever, especially for a gear shift lever of a motor vehicle gearbox
Palier pour un levier, en particulier pour un levier de changement de vitesse pour une boîte de vitesses d'un véhicule à moteur

(30) Priorität: 22.02.1995 DE 19506072
(43) Veröffentlichungstag der Anmeldung: 28.08.1996
(73) Patentinhaber: ADAM OPEL AG, 65423 Rüsselsheim (DE)
(72) Erfinder: Renk, Rolf, Dipl.-Ing., D-65462 Ginsheim (DE)
(74) Vertreter: Kümpfel, Heinz, Dipl.-Ing.

(56) Entgegenhaltungen:
- EP-A- 0 075 414
- EP-A- 0 332 842
- EP-A- 0 552 521
- US-A- 4 158 969

## Beschreibung

Die Erfindung bezieht sich auf eine Lagerung für den Schalthebel insbesondere eines Geschwindigkeitswechselgetriebes eines Kraftfahrzeuges gemäß dem Oberbegriff des Anspruches 1.

Eine Lagerung für einen Schalthebel ist beispielsweise mit DE 33 41 878 beschrieben. Bei dieser wird eine fest mit einem Schalthebel verbundene Gelenkkugel in einer von zwei Lagerschalen gebildeten Lagerpfanne unter Vorspannung gehalten. Eine derartige Lagerung kann zwar spielfrei ausgebildet werden, jedoch wird das Verschwenken des Schalthebels durch die Reibung zwischen der Gelenkkugel und den Lagerschalen erheblich gebremst. Das Bremsmoment überlagert sich den sonstigen Schaltkräften und macht die Schaltung schwergängig.

Mit EP-A-0 332 842 ist eine Lagerung für einen Schalthebel in einem Kraftfahrzeug nach dem Oberbegriff des Anspruchs 1 beschrieben, bei der der Schalthebel um eine definierte erste Achse schwenkbar in einem Schaltlagerkörper abgestützt und dieser Schaltlagerkörper um eine andere definierte Achse sowie mit eingeschränktem Drehwinkel um die durch die Mitte der ersten Achse sowie durch eine Gelenkverbindung mit einer Schaltstange gelegte Hochachse drehbar in einem mit der Karosserie des Kraftfahrzeuges fest verbundenen Führungs-Bauteil gelagert ist. Der Schaltlagerkörper umfaßt eine Kugel und ein mit der Kugel fest verbundenes zylindrisches Teil. Er umfängt den Schalthebel mit einer durchgehenden Öffnung. Der Schalthebel ist im zylindrischen Teil mit einem Zapfen um die erste Achse schwenkbar gelagert. Die Kugel ist an ihrem Umfang mit zwei Zapfen versehen, welche die andere Achse bilden. Diese Zapfen greifen in Schlitze eines um die Kugel angeordneten Ringes ein, welcher mit dem Führungs-Bauteil verbunden ist.

Mit einer solchen Lagerung kann zwar der Kraftaufwand für die Ausführung der Schaltbewegung verringert werden, der Schalthebel hat jedoch für die Wahlbewegung und für die Schaltbewegung voneinander abweichende Drehachsen, nämlich für das Wählen der Schaltgasse die Zapfen an der Kugel und für das Schalten der Gänge den Zapfen am Zylinderteil. Wähl- und Schaltbewegung verlaufen somit am Schalthebelknauf auf Bahnen mit unterschiedlichem Radius, so daß die Schalttätigkeit vom üblichen Bewegungsablauf abweicht. Nachteilig ist weiterhin der relativ hohe Bauaufwand durch die Verwendung von zwei durch Zapfen gebildete Schwenkachsen und einen zusätzlichen Ring an der Kugel.

Der Erfindung liegt die Aufgabe zugrunde, eine Lagerung für einen Schalthebel insbesondere eines Geschwindigkeitswechselgetriebes zu schaffen, welche gegenüber den bekannten Ausführungen bei gleichbleibender Spielfreiheit und zumindest gleich geringem Reibmoment in Schaltrichtung und somit auch geringem Kraftaufwand beim Schalten mit geringerem Bauaufwand auskommt und bei der darüber hinaus für die Bahn des Schalthebelknaufes beim Wählen und Schalten gleiche Radien vorliegen.

Erfindungsgemäß wird diese Aufgabe durch die kennzeichnenden Merkmale des Anspruches 1 gelöst.

Beim Schwenken um den Lagerzapfen der Kugel muß sich die Kugel gegenüber der Kugelführung nicht bewegen. Es muß dabei lediglich die Reibkraft zwischen Lagerzapfen und Kugel überwunden werden. Da diese Reibkraft infolge des geringeren Durchmessers des Lagerzapfens gegenüber der Kugel auf einen wesentlich geringeren Hebelarm wirkt, ist das hemmende Reibmoment auf den Schalthebel ebenfalls wesentlich geringer. Die Kugel liegt darüber hinaus im wesentlichen nur an vier Punkten in der Kugelführung an. Das sichert Spielfreiheit in allen Schwenkrichtungen. Bei Ausrichtung der Achse des Lagerzapfens in eine Richtung, die ein reibungsarmes Verschwenken des Schalthebels in der Schaltrichtung ermöglicht, kann so eine spürbare Schalterleichterung erzielt werden.

Die Ansprüche 2 bis 8 betreffen vorteilhafte konstruktive Maßnahmen einer Lagerung nach Anspruch 1.

So wird durch die elastische Ausbildung der Enden des Lagerzapfens eine sichere seitliche Führung des Schalthebels in der Kugelführung erreicht, bei der Klappern sicher unterbunden ist.

Die auf den Lagerzapfen aufklipsbare Ausbildung der Kugel ermöglicht eine sehr einfache Montage. Das Einklipsen wird durch Verwendung von elastischem Werkstoff für die Kugel erleichtert. Durch die Gestaltung der Kugel kann deren elastisches Verhalten verbessert werden. Die Zweiteiligkeit der Kugel kann in bestimmten Fällen die Montage erleichtern.

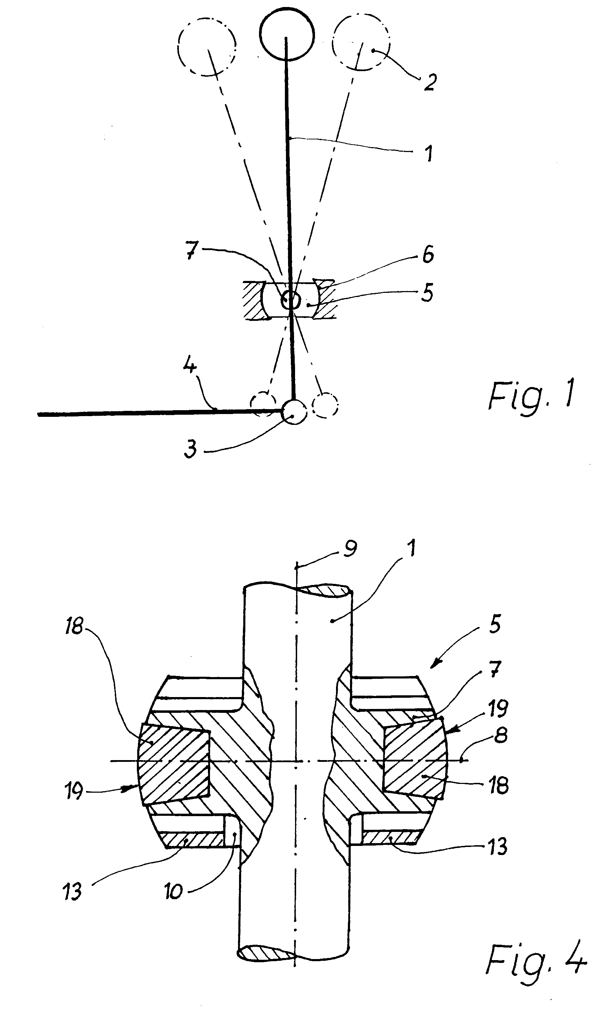

Ausführungsbeispiele der Erfindung sind nachstehend anhand von Zeichnungen näher erläutert. Es zeigen
- Fig. 1:: eine Lagerung eines Schalthebels in schematisierter Weise;

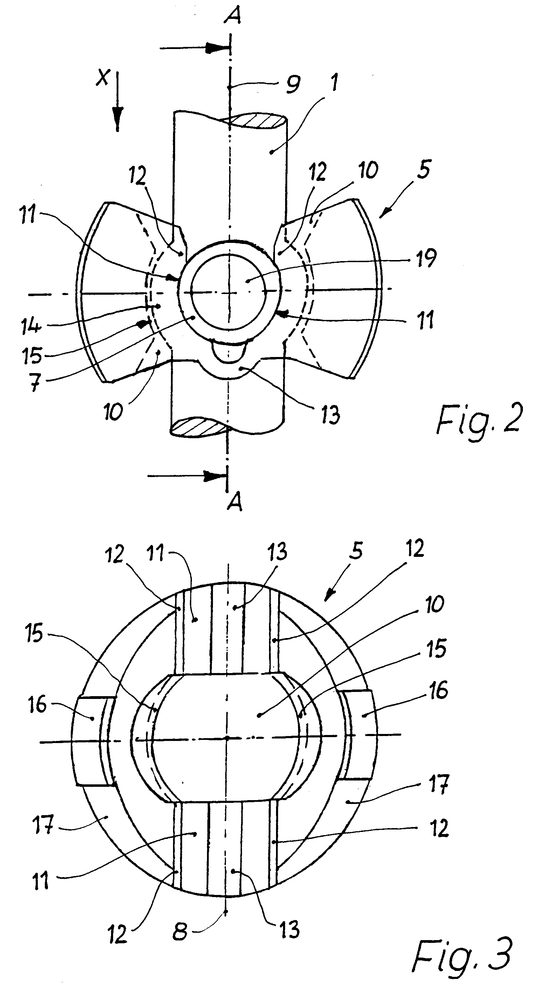

- Fig. 2:: die Lagerung des Schalthebels nach Fig. 1 in vergrößerter Darstellung;
- Fig. 3:: eine Ansicht in Richtung X auf die Kugel der Lagerung nach Fig. 2;
- Fig. 4:: einen Schnitt entlang der Linie A - A in Fig. 2;
- Fig. 5:: die Ansicht einer weiteren Ausführungsform einer Lagerung nach der Erfindung;
- Fig. 6:: eine Draufsicht auf eine dritte Ausführungsform einer Lagerung, teilweise im Schnitt.

Ein Schalthebel 1 trägt an seinem oberen Ende einen Schaltknauf 2 und an seinem unteren Ende ein Gelenk 3. Mittels des Gelenkes 3 ist der Schalthebel 1 an einer Schaltstange 4 angelenkt, die zu einer Schaltwelle eines Geschwindigkeitswechselgetriebes eines Kraftfahrzeuges führt. Am Schaft des Schalthebels 1 befindet sich eine Kugel 5, welche von einer Kugelführung 6 eines mit dem Fahrzeugkörper verbundenen Schaltgehäuses derart umfangen ist, daß der Schalthebel 1 um den Mittelpunkt der Kugel 5 allseitig verschwenkbar ist.

Die Kugel 5 ist an dem Schalthebel 1 schwenkbar auf einem fest mit dem Schalthebel 1 verbundenen Lagerzapfen 7 gelagert, dessen Mittelachse 8 senkrecht zur Mittelachse 9 des Schalthebels 1 verläuft. Dazu ist die Kugel 5 mit einem Durchbruch 10, mit dem sie den Schalthebel 1 umfängt sowie mit zwei Lageraugen 11, die auf dem Lagerzapfen 7 aufsitzen, versehen. Die Lageraugen 11 sind in Richtung zum Schaltknauf 2 hin offen und mit Klipsnoppen 12 versehen, die über den Durchmesser des Lagerzapfens 7 hinweg gedrückt werden können. Dabei kann sich die Kugel 5 im Bereich einer Biegezone 13 elastisch verformen. Der Schalthebel 1 ist in Höhe des Lagerzapfens 7 mit einer kugeligen Wulst 14 versehen. Die Kugel 5 hat eine innere kugelige Begrenzung 15, deren Durchmesser geringfügig größer als der Durchmesser der Wulst 14 ist, so daß sich bei Normalbelastung des Schalthebels 1 die Wulst 14 und die Begrenzung 15 nicht berühren.

Am äußeren Umfang der Kugel 5 ist in einer Ebene ihres größten Durchmessers und senkrecht zur Mittelachse 8 des Lagerzapfens 7 ein Bereich 16 mit geringfügig größerem Durchmesser als in den übrigen Umfangsbereichen 17 vorgesehen. Dieser Bereich 16 liegt gleitend an der Kugelführung 6 des Schaltgehäuses an. An den beiden Enden des Lagerzapfens 7 sind elastische Einsätze 18 eingelassen, deren äußeren kugeligen Flächen 19 und Vorspannung an der Kugelführung 6 des Schaltgehäuses anliegen.

Bei einer so ausgebildeten Lagerung des Schalthebels 1 ist die Kugel 5 vorzugsweise aus einem Kunststoff gefertigt, der so weit elastisch ist, daß sich die Kugel 5 durch elastische Verformung in der Biegezone 13 mit den Klipsnoppen 12 über den Lagerzapfen 7 drücken läßt und dann mit den Lageraugen 11 auf dem Lagerzapfen 7 aufliegt. Der Schalthebel 1 kann so um die Mittelachse 8 des Lagerzapfens 7 in der Kugel 5 eine Schwenkbewegung ausführen, bei der sich die Kugel 5 in der Kugelführung 6 nicht bewegen muß. Die von der Lagerung herrührende Reibkraft auf den Schalthebel 1 greift bei Schwenkbewegungen des Schalthebels 1 um den Lagerzapfen 7 daher nur am Umfang des Lagerzapfens 7 an, dessen Radius deutlich kleiner als der Radius der Kugel 5 ist. Damit ist auch das Reibmoment auf den Schalthebel 1 entsprechend kleiner. Wenn nun diese Schwenkrichtung des Schalthebels 1 auch die Schaltrichtung der zu schaltenden Gänge ist, dann kann die aufzuwendende Schaltkraft spürbar reduziert werden.

Da der Bereich 16 mit größerem Durchmesser gegenüber dem verbleibenden Kugel-Umfangsbereich 17 ausgeführt ist, liegt die Kugel 5 nur in diesem Bereich 16 an der Kugelführung 6 an. Senkrecht zu dieser von dem Berührungsbereich 16 gebildeten Meridianebene liegen die kugeligen Flächen 19 der Einsätze 18 an den Enden des Lagerzapfens 7 an der Kugelführung 6 an. Damit wird auch die Kugel 5 gegenüber der Kugelführung 6 reibarm und trotzdem spielfrei abgestützt.

Um bei Überbelastung des Schalthebels 1 einer übermäßigen Belastung des Lagerzapfens 7 vorzubeugen, ist am Schalthebel 1 innerhalb der Kugel 5 der kugelige Wulst 14 vorgesehen, der sich dann an die Begrenzung 15 anlegt und die Kraft auf die Kugel 5 direkt weiterleitet.

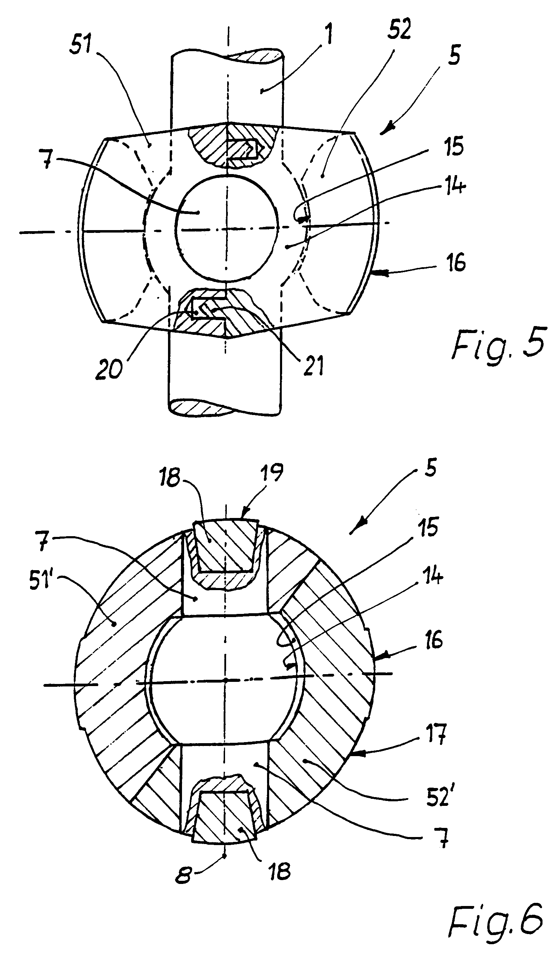

In Figur 5 ist eine gegenüber dem ersten Ausführungsbeispiel konstruktiv abgewandelte Ausführungsform der erfindungsgemäßen Lagerung dargestellt. Die Kugel 5 besteht hier aus zwei Hälften 51 und 52, deren Trennebene durch eine von der Mittelachse 9 des Schalthebels 1 und der Mittelachse 8 des Lagerzapfens 7 bestimmt ist. Die beiden Hälften 51, 52 der Kugel 5 sind identische Teile und durch Paßlöcher 20 sowie Paßzapfen 21 zueinander zentriert. Bei dieser Ausführungsform enthält jede der beiden Hälften 51, 52 der Kugel 5 zwei Hälften des Lagerauges 11. Die jeweils halben Lageraugen ergänzen sich beim Aneinanderfügen der Hälften 51, 52 der Kugel 5 zu Lageraugen 11 mit vollem Umfang.

Eine solche Ausführung unterscheidet sich in der Funktion von der zuerst beschriebenen lediglich durch eine andere Montageweise, in dem der Schalthebel 1 nicht mehr durch einen Durchbruch geführt werden muß. Dies kann dann von Vorteil sein, wenn ein Durchstecken des Schalthebels 1 durch einen Durchbruch wegen bereits vormontierter Teile am Schalthebel 1 nicht möglich ist.

Ein weiteres Ausführungsbeispiel ist in Figur 6 dargestellt. Bei diesem ist die Kugel 5 in einer Ebene geteilt, die durch die Mittelachse 9 des unverschwenkten Schalthebels 1 und eine etwa 45° zur Mittelachse 8 des Lagerzapfens 7 verdrehten Achse bestimmt ist. Die beiden Hälften 51', 52' der Kugel 5 sind auch hier als Gleichteile herstellbar. Jede dieser Hälften 51', 52' weist ein volles Lagerauge 11 auf, das bei der Montage auf den Lagerzapfen 7 aufgeschoben wird. Auch eine solche Ausführung eignet sich vorteilhaft dann, wenn ein Durchstecken des Schalthebels 1 durch einen Durchbruch einer Kugel nicht möglich ist.

## Patentansprüche

1. Lagerung für den Schalthebel insbesondere eines Geschwindigkeitswechselgetriebes eines Kraftfahrzeuges, umfassend eine mit dem Schalthebel mittels eines Lagerzapfens (7) schwenkbar verbundene Kugel und eine mit einem Schaltgehäuse verbundene, die Kugel (5) zumindest teilweise umfassende Kugelführung (6), wobei die Mittelachse (8) des Lagerzapfens (7) senkrecht zur Mittelachse (9) des Schalthebels (1) verläuft und der Durchmesser des Lagerzapfens (7) wesentlich geringer als der Durchmesser der Kugel (5) ist, **dadurch gekennzeichnet,** daß der Lagerzapfen (7) fest mit dem Schalthebel (1) verbunden ist, die Mittelachse (8) des Lagerzapfens (7) durch die Mitte der Kugel (5) verläuft und die Oberfläche der Kugel (5) in einer Ebene ihres größten senkrecht zur Mittelachse (8) des Lagerzapfens (7) verlaufenden Durchmessers einen an der Kugelführung (6) anliegenden Bereich (16) mit geringfügig größerem Durchmesser als in den übrigen Umfangsbereichen (17) aufweist.

2. Lagerung nach Anspruch 1, **dadurch gekennzeichnet,** daß an der Peripherie der Kugel (5) liegende Enden des Lagerzapfens (7) elastisch ausgebildet sind und mit Vorspannung an der Kugelführung (6) anliegen.

3. Lagerung nach einem oder beiden der Ansprüche 1 und/oder 2, **dadurch gekennzeichnet,** daß die Kugel (5) einstückig und mit einem Durchbruch (10) für den Durchtritt des Schalthebels (1) sowie mit zu einer Seite hin offenen Lageraugen (11) ausgebildet ist und mit der seitlichen Öffnung der Lageraugen (11) über den Lagerzapfen (7) geklipst ist.

4. Lagerung nach Anspruch 3, **dadurch gekennzeichnet,** daß die Kugel (5) aus elastischem Material, vorzugsweise Kunststoff, besteht.

5. Lagerung nach Anspruch 3 und 4, **dadurch gekennzeichnet,** daß die Kugel (5) parallel zur Mittelachse (8) des Lagerzapfens (7) mit einer die beiden jeweils an den Seiten des Schalthebels (1) befindlichen Kugelhälften verbindenden elastischen Biegezone (13) versehen ist.

6. Lagerung nach Anspruch 1 und 2, **dadurch gekennzeichnet,** daß die Kugel (5) aus zwei Hälften (51, 52) zusammengesetzt ist, deren Trennebene durch die Mittelachse (9) des unverschwenkten Schalthebels (1) und die Mittelachse (8) des Lagerzapfens (7) bestimmt ist.

7. Lagerung nach Anspruch 1 und 2, **dadurch gekennzeichnet,** daß die Kugel (5) aus zwei Hälften (51', 52') zusammengesetzt ist, deren Trennebene durch die Mittelachse (9) des unverschwenkten Schalthebels (1) und einer etwa 45° zur Mittelachse (8) des Lagerzapfens (7) um die Mittelachse (9) des Schalthebels (1) verdrehten Achse bestimmt ist.

8. Lagerung nach Anspruch 6 oder 7, **dadurch gekennzeichnet,** daß die Hälften (51, 52; 51', 52') der Kugel (5) in ihrer Trennebene mit Paßzapfen (21) und diesen entsprechenden Paßlöchern (20) versehen sind.

## Claims

1. Mounting for the gear lever in particular of a change-speed gearbox of a motor vehicle, including a ball pivotably connected to the gear lever by means of a journal (7), and a ball guide (6) connected to a gearbox housing and at least partially encompassing the ball (5), wherein the centre axis (8) of the journal (7) extends perpendicularly to the centre axis (9) of the gear lever (1) and the diameter of the journal (7) is substantially smaller than the diameter of the ball (5), characterised in that the journal (7) is rigidly connected to the gear lever (1), the centre axis (8) of the journal (7) passes through the centre of the ball (5) and the surface of the ball (5) in one plane of its maximum diameter extending perpendicularly to the centre axis (8) of the journal (7) comprises a region (16) abutting against the ball guide (6) with a slightly larger diameter than in the other circumferential regions (17).

2. Mounting according to claim 1, characterised in that ends of the journal (7) located at the periphery of the ball (5) are of resilient construction and abut against the ball guide (6) with initial tension.

3. Mounting according to one or both of claims 1 and/or 2, characterised in that the ball (5) is constructed in one piece and with an aperture (10) for passage of the gear lever (1) as well as with bearing eyes (11) opening to one side and is clipped with the side opening of the bearing eyes (11) over the journal (7).

4. Mounting according to claim 3, characterised in that the ball (5) is made of resilient material, preferably plastic.

5. Mounting according to claims 3 and 4, characterised in that the ball (5) parallel to the centre axis (8) of the journal (6) is provided with a resilient bend zone (13) connecting the two ball halves located respectively on the sides of the gear lever (1).

6. Mounting according to claims 1 and 2, characterised in that the ball (5) is composed of two halves (51, 52) of which the dividing plane is determined by the centre axis (9) of the unpivoted gear lever (1) and the centre axis (8) of the journal (7).

7. Mounting according to claims 1 and 2, characterised in that the ball (5) is composed of two halves (51', 52') of which the dividing plane is determined by the centre axis (9) of the unpivoted gear lever (1) and an axis turned about 45° to the centre axis (8) of the journal (7) about the centre axis (9) of the gear lever (1).

8. Mounting according to claim 6 or 7, characterised in that the halves (51, 52; 51', 52') of the ball (5) in its dividing plane are provided with mating pins (21) and mating holes (20) corresponding to them.

## Revendications

1. Palier pour un levier, notamment pour le levier de changement de vitesse d'une boîte de vitesse d'un véhicule automobile comprenant une rotule qui est liée au levier de changement de vitesse avec possibilité de pivotement par l'intermédiaire d'un tourillon (7) et un guide (6) de rotule qui entoure au moins partiellement la rotule (5), l'axe médian (8) du tourillon (7) étant perpendiculaire à l'axe médian (9) du levier de changement de vitesse (1) et le diamètre du tourillon (7) étant sensiblement plus petit que le diamètre de la rotule (5), caractérisé par le fait que le tourillon (7) est lié rigidement au levier de changement de vitesse (1), que l'axe médian (8) du tourillon (7) passe par le centre de la rotule (5), et que la surface de la rotule (5) dans un plan de son diamètre maximal perpendiculaire à l'axe médian (8) du tourillon (7), comporte une zone (16) dont le diamètre est légèrement supérieur au diamètre du reste (17) de la circonférence et qui est en contact avec le guide (6) de rotule.

2. Palier selon la revendication 1, caractérisé par le fait que les extrémités du tourillon (7) situées sur la périphérie de la rotule (5) sont élastiques et sont appliquées avec précontrainte sur le guide (6) de rotule.

3. Palier selon la revendication 1 ou 2 ou selon les deux revendications 1 et 2, caractérisé par le fait que la rotule (5) est monobloc et est pourvue d'une ouverture (10) pour le passage du levier de changement de vitesse (1) ainsi que de bossages (11) de palier ouverts en direction d'un côté et est clipsée avec l'ouverture latérale des bossages de palier (11) sur les tourillons (7).

4. Palier selon la revendication 3, caractérisé par le fait que la rotule (5) est en un matériau élastique, de préférence en matière plastique.

5. Palier selon les revendications 3 et 4, caractérisé par le fait que la rotule (5), parallèlement à l'axe médian (8) du tourillon (7) est pourvue d'une zone élastique (13) de flexion qui relie les deux moitiés de rotule et est disposée chaque fois sur le côté du levier de changement de vitesse (1).

6. Palier selon les revendications 1 et 2, caractérisé par le fait que la rotule (5) est formée de deux moitiés (51, 52) dont le plan de séparation est défini par l'axe médian (9) du levier de changement de vitesse (1) en position non pivotée et l'axe médian (8) du tourillon (7).

7. Palier selon les revendications 1 et 2, caractérisé par le fait que la rotule (5) est formée de deux moitiés (51', 52') dont le plan de séparation est défini par l'axe médian (9) du levier de changement de vitesse (1) en position non pivotée et par un axe incliné d'environ 45° par rapport à l'axe médian (8) du tourillon (7) autour de l'axe médian (9) du levier de changement de vitesse (1).

8. Palier selon la revendication 6 ou 7, caractérisé par le fait que les moitiés (51, 52; 51', 52') de la rotule (5) sont pourvues, au niveau de leur plan de séparation, de goupilles (21) de centrage et de trous de centrage (20) associés.
